(19) Europäisches Patentamt / European Patent Office / Office européen des brevets

(11) EP 2 794 756 B1

(12) EUROPEAN PATENT SPECIFICATION

(45) Date of publication and mention of the grant of the patent:
**16.09.2015 Bulletin 2015/38**

(21) Application number: **12805521.7**

(22) Date of filing: **18.12.2012**

(51) Int Cl.:
***C08L 23/14*** $^{(2006.01)}$ ***C08F 2/00*** $^{(2006.01)}$

(86) International application number:
**PCT/EP2012/075995**

(87) International publication number:
**WO 2013/092615 (27.06.2013 Gazette 2013/26)**

# (54) PROCESS FOR THE PREPARATION OF A HETEROPHASIC PROPYLENE COPOLYMER

VERFAHREN ZUR HERSTELLUNG EINES HETEROPHASIGEN PROPYLENCOPOLYMERS

PROCÉDÉ DE PRÉPARATION D'UN COPOLYMÈRE HÉTÉROPHASIQUE DE PROPYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.12.2011 EP 11195485**

(43) Date of publication of application:
**29.10.2014 Bulletin 2014/44**

(73) Proprietor: **Borealis AG**
**1220 Vienna (AT)**

(72) Inventors:
- **GAHLEITNER, Markus**
  **A-4501 Neuhofen/Krems (AT)**
- **KLIMKE, Katja**
  **A-4020 Linz (AT)**
- **BERNREITNER, Klaus**
  **A-4010 Linz (AT)**
- **SANDHOLZER, Martina**
  **A-4030 Linz (AT)**
- **HORILL, Thomas**
  **A-2201 Gerasdorf (AT)**

(74) Representative: **Maiwald Patentanwalts GmbH**
**Elisenhof**
**Elisenstrasse 3**
**80335 München (DE)**

(56) References cited:
**EP-A1- 1 681 315**
**WO-A1-2011/050963**
**WO-A1-2011/076354**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 794 756 B1

## Description

The present invention is directed to a new process for the manufacture of soft heterophasic propylene copolymers.

Polymers are increasingly used in different demanding applications. At the same time there is a continuous seek for tailored polymers which meet the requirements of these applications. The demands can be challenging, since many polymer properties are directly or indirectly interrelated. For instance, heterophasic systems are known for their good impact behavior. Such heterophasic propylene copolymers comprise a matrix being either a propylene homopolymer or a random propylene copolymer in which an elastomeric copolymer is dispersed. Thus the polypropylene matrix contains (finely) dispersed inclusions being not part of the matrix and said inclusions contain the elastomeric copolymer. The term "inclusion" accordingly indicates that the matrix and the inclusion form different phases within the heterophasic system, said inclusions are for instance visible by high resolution microscopy, like electron microscopy or atomic force microscopy, or by dynamic mechanical thermal analysis (DMTA). Specifically in DMTA the presence of a multiphase structure can be identified by the presence of at least two distinct glass transition temperatures.

A specific soft heterophasic propylene copolymer is described in WO 2008/141934 A1. This heterophasic propylene copolymer has a rather low melting temperature, which is detrimental in view of sterilization.

However in the field of packaging soft materials with good optical properties are required, which remain on a high level after sterilization.

Accordingly it is the object of the present invention to provide a process of a soft heterophasic propylene copolymer with good optical properties in particular after sterilization.

The finding of the present invention is that the soft heterophasic propylene copolymer must be produced in a sequential polymerization process, wherein the process is run in at least three, preferably four, reactors and the matrix contains rather high amounts of comonomers. Preferably the propylene content of xylene cold soluble (XCS) fraction is very high.

Accordingly the present invention is directed to a process for the preparation of a heterophasic propylene copolymer (RAHECO) comprising a random propylene copolymer (R-PP) and an elastomeric propylene copolymer (E), wherein the process is a sequential polymerization process comprising the steps of

(a) polymerizing in a first reactor (R1)
propylene and
ethylene and/or a C4 to C12 α-olefin
obtaining a first random propylene copolymer fraction (R-PP1),
(b) transferring the first random propylene copolymer fraction (R-PP1) into a second reactor (R2),
(c) polymerizing in said second reactor (R2) in the presence of the first random propylene copolymer fraction (R-PP1)
propylene and
ethylene and/or a C4 to C12 α-olefin,
obtaining a second random propylene copolymer fraction (R-PP2), the first random propylene copolymer fraction (R-PP1) and the second random propylene copolymer fraction (R-PP2) form the matrix (M) of the heterophasic propylene copolymer (RAHECO), i.e. form the random propylene copolymer (R-PP),
wherein said matrix (M), i.e. the random propylene copolymer (R-PP), has a
comonomer content in the range of 1.0 to 9.0 wt.-%,
(d) transferring said the matrix (M), i.e. said random propylene copolymer (R-PP) into a third reactor (R3),
(e) polymerizing in said third reactor (R3) in the presence of said the matrix (M), i.e. of said random propylene copolymer (R-PP),
propylene and
ethylene and/or a C4 to C12 α-olefin,
obtaining a first fraction (E-1) of the elastomeric propylene copolymer (E) of the heterophasic propylene copolymer (RAHECO), said first fraction (E-1) and the matrix (M), i.e. said random propylene copolymer (R-PP), form a first intimate mixture (IM),
(f) transferring said first intimate mixture (IM) into a fourth reactor (R4),
(g) polymerizing in said fourth reactor (R4) in the presence of the first intimate mixture (IM)
propylene and
ethylene and/or a C4 to C12 α-olefin,
obtaining a second fraction (E-2) of the elastomeric propylene copolymer (E) of the heterophasic propylene copolymer (RAHECO), the second fraction (E-2) and the first intimate mixture (IM) form the heterophasic propylene copolymer (RAHECO),
(h) removing the heterophasic propylene copolymer (RAHECO) from the fourth reactor (R4),
(i) optionally visbreaking said the heterophasic propylene copolymer (RAHECO), wherein

the heterophasic propylene copolymer (RAHECO) after step (g) and/or (i) has

(i) a xylene cold soluble content (XCS) determined according ISO 16152 (25 °C) in the range of 20 to 45 wt.-%, and
(ii) a comonomer content in the range of 7.5 to 12.0 wt.-%,
and wherein further
(iii) the xylene cold soluble (XCS) fraction of the heterophasic propylene copolymer (RAHECO) after step (g) and/or (i) has a comonomer content in the range of 16.0 to 28.0 wt.-%.

It has surprisingly been found that such a process enables a skilled person to produce a soft heterophasic propylene copolymer (RAHECO) with high melting temperature and good optical properties without causing clogging of the transfer lines.

In the following the invention is described in more detail.

The term "heterophasic propylene copolymer" as used in the present application is understood in a known manner. A heterophasic propylene copolymer comprises a polymer matrix, like a (semi)crystalline polypropylene, in which the amorphous material, like an elastomeric propylene copolymer, is dispersed. Thus the instant heterophasic propylene copolymer (RAHECO) comprises a matrix (M) being a random propylene copolymer (R-PP) and dispersed therein an elastomeric propylene copolymer (E). Thus the matrix (M) contains (finely) dispersed inclusions being not part of the matrix (M) and said inclusions contain the elastomeric propylene copolymer (E). The term inclusion indicates that the matrix (M) and the inclusion form different phases within the heterophasic propylene copolymer (RAHECO), said inclusions are for instance visible by high resolution microscopy, like electron microscopy or atomic force microscopy, or by dynamic mechanical thermal analysis (DMTA). Specifically in DMTA the presence of a multiphase structure can be identified by the presence of at least two distinct glass transition temperatures.

Preferably the heterophasic propylene copolymer (RAHECO) according to this invention comprises as polymer components only the random propylene copolymer (R-PP) and the elastomeric propylene copolymer (E). In other words the heterophasic propylene copolymer (RAHECO) may contain further additives but no other polymer in an amount exceeding 5 wt-%, more preferably exceeding 3 wt.-%, like exceeding 1 wt.-%, based on the total heterophasic propylene copolymer (RAHECO). One additional polymer which may be present in such low amounts is a polyethylene which is a by-reaction product obtained by the preparation of heterophasic propylene copolymer (RAHECO). Accordingly it is in particular appreciated that the instant heterophasic propylene copolymer (RAHECO) contains only the random propylene copolymer (R-PP), the elastomeric propylene copolymer (E) and optionally polyethylene in amounts as mentioned in this paragraph.

The term "intimate mixture (IM)" shall indicate that the first fraction (E-1) is dispersed in the matrix (M) of the heterophasic propylene copolymer (RAHECO).

The term "random" indicates that the comonomers of the random propylene copolymer (R-PP), as well as of the first propylene copolymer fraction (R-PP1) and the second propylene copolymer fraction (R-PP2) are randomly distributed within the propylene copolymers. The term random is understood according to IUPAC (Glossary of basic terms in polymer science; IUPAC recommendations 1996).

The term "sequential polymerization process" indicates that the heterophasic propylene copolymer (RAHECO) is produced in at least three reactors, preferably in four reactors, connected in series. Accordingly the present process comprises at least a first reactor (R1), a second reactor (R2), a third reactor (R3), and a fourth reactor (R4). The term "polymerization reactor" shall indicate that the main polymerization takes place. Thus in case the process consists of four polymerization reactors, this definition does not exclude the option that the overall process comprises for instance a pre-polymerization step in a pre-polymerization reactor. The term "consist of" is only a closing formulation in view of the main polymerization reactors.

Preferably between the second reactor (R2), the third reactor (R3) and the fourth reactor (R4) the monomers are flashed out.

The first reactor (R1) is preferably a slurry reactor (SR) and can be any continuous or simple stirred batch tank reactor or loop reactor operating in bulk or slurry. Bulk means a polymerization in a reaction medium that comprises of at least 60 % (w/w) monomer. According to the present invention the slurry reactor (SR) is preferably a (bulk) loop reactor (LR).

The second reactor (R2), the third reactor (R3), and the fourth reactor (R4) are preferably gas phase reactors (GPR). Such gas phase reactors (GPR) can be any mechanically mixed or fluid bed reactors. Preferably the gas phase reactors (GPR) comprise a mechanically agitated fluid bed reactor with gas velocities of at least 0.2 m/sec. Thus it is appreciated that the gas phase reactor is a fluidized bed type reactor preferably with a mechanical stirrer.

Thus in a preferred embodiment the first reactor (R1) is a slurry reactor (SR), like loop reactor (LR), whereas the second reactor (R2), third reactor (R3) and the fourth reactor (R4) are gas phase reactors (GPR). Accordingly for the instant process at least three, preferably four polymerization reactors, namely a slurry reactor (SR), like loop reactor (LR), a first gas phase reactor (GPR-1), a second gas phase reactor (GPR-2) and a third gas phase reactor (GPR-3)

connected in series are used. If needed prior to the slurry reactor (SR) a pre-polymerization reactor is placed.

A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol® process of Basell.

Preferably, in the instant process for producing the heterophasic propylene copolymer (RAHECO) as defined herein the conditions for the first reactor (R1), i.e. the slurry reactor (SR), like a loop reactor (LR), of step (a) may be as follows:

- the temperature is within the range of 40 °C to 110 °C, preferably between 60 °C and 100 °C, 68 to 90 °C,
- the pressure is within the range of 20 bar to 80 bar, preferably between 40 bar to 70 bar,
- hydrogen can be added for controlling the molar mass in a manner known per se.

Subsequently, the reaction mixture from step (a) is transferred into the second reactor (R2), i.e. gas phase reactor (GPR-1), i.e. to step (c), whereby the conditions in step (c) are preferably as follows:

- the temperature is within the range of 50 °C to 130 °C, preferably between 60 °C and 100 °C,
- the pressure is within the range of 5 bar to 50 bar, preferably between 15 bar to 35 bar,
- hydrogen can be added for controlling the molar mass in a manner known per se.

The condition in the third reactor (R3), preferably in the second gas phase reactor (GPR-2), and the fourth reactor (R4), preferably in the third gas phase reactor (GPR-3), are similar to the second reactor (R2).

The residence time can vary in the three reactor zones.

In one embodiment of the process for producing the heterophasic propylene copolymer (RAHECO) the residence time the first reactor (R1), i.e. the slurry reactor (SR), like a loop reactor (LR), is in the range 0.2 to 4 hours, e.g. 0.3 to 1.5 hours and the residence time in the gas phase reactors will generally be 0.2 to 6.0 hours, like 0.5 to 4.0 hours.

If desired, the polymerization may be effected in a known manner under supercritical conditions in the first reactor (R1), i.e. in the slurry reactor (SR), like in the loop reactor (LR), and/or as a condensed mode in the gas phase reactors (GPR).

Preferably the process comprises also a prepolymerization with the catalyst system, as described in detail below, comprising a Ziegler-Natta procatalyst, an external donor and optionally a cocatalyst.

In a preferred embodiment, the prepolymerization is conducted as bulk slurry polymerization in liquid propylene, i.e. the liquid phase mainly comprises propylene, with minor amount of other reactants and optionally inert components dissolved therein.

The prepolymerization reaction is typically conducted at a temperature of 0 to 50 °C, preferably from 10 to 45 °C, and more preferably from 15 to 40 °C.

The pressure in the prepolymerization reactor is not critical but must be sufficiently high to maintain the reaction mixture in liquid phase. Thus, the pressure may be from 20 to 100 bar, for example 30 to 70 bar.

The catalyst components are preferably all introduced to the prepolymerization step. However, where the solid catalyst component (i) and the cocatalyst (ii) can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is possible to add other components also to the prepolymerization stage. Thus, hydrogen may be added into the prepolymerization stage to control the molecular weight of the prepolymer as is known in the art. Further, antistatic additive may be used to prevent the particles from adhering to each other or to the walls of the reactor.

The precise control of the prepolymerization conditions and reaction parameters is within the skill of the art.

According to the invention the heterophasic propylene copolymer (RAHECO) is obtained by a sequential polymerization process, as described above, in the presence of a catalyst system comprising a Ziegler-Natta catalyst and optionally an external donor, preferably a catalyst system comprising three components, namely as component (i) a Ziegler-Natta procatalyst, and optionally as component (ii) an organometallic cocatalyst and as component (iii) an external donor represented by formula (IIIa) or (IIIb), preferably represented by formula (IIIa).

The process runs especially efficient by using a Ziegler-Natta catalyst system, preferably by using a Ziegler-Natta catalyst system as defined herein in detail below, and a specific comonomer/propylene ratio in the second reactor (R2) and/or in the third (R3) and forth reactor (R4), respectively. Accordingly it is preferred that

(a) the comonomer/propylene ratio [Co/C3], like the ethylene/propylene ratio [C2/C3], in the second reactor (R2), i.e. in step (c), is in the range of 5 to 60 mol/kmol, more preferably in the range of 10 to 40 mol/kmol,

and/or

(b) the comonomer/propylene ratio [Co/C3], like the ethylene/propylene ratio [C2/C3], in the third reactor (R3), i.e. in step (e), is in the range of 160 to 200 mol/kmol, more preferably in the range of 170 to 190 mol/kmol, and/or

(c) the comonomer/propylene ratio [Co/C3], like the ethylene/propylene ratio [C2/C3], in the fourth reactor (R4), i.e. in step (g), is in the range of 160 to 200 mol/kmol, more preferably in the range of 170 to 190 mol/kmol.

In the following the used catalyst is defined in more detail.

Preferably component (i) is a Ziegler-Natta procatalyst which contains a trans-esterification product of a lower alcohol and a phthalic ester.

The procatalyst used according to the invention is prepared by

a) reacting a spray crystallized or emulsion solidified adduct of $MgCl_2$ and a $C_1$-$C_2$ alcohol with $TiCl_4$
b) reacting the product of stage a) with a dialkylphthalate of formula (I)

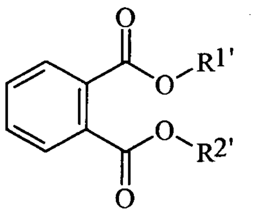

(I)

wherein $R^{1'}$ and $R^{2'}$ are independently at least a $C_5$ alkyl
under conditions where a transesterification between said $C_1$ to $C_2$ alcohol and said dialkylphthalate of formula (I) takes place to form the internal donor
c) washing the product of stage b) or
d) optionally reacting the product of step c) with additional $TiCl_4$.

The procatalyst is produced as defined for example in the patent applications WO 87/07620, WO 92/19653, WO 92/19658 and EP 0 491 566.

First an adduct of $MgCl_2$ and a $C_1$-$C_2$ alcohol of the formula $MgCl_2$*nROH, wherein R is methyl or ethyl and n is 1 to 6, is formed. Ethanol is preferably used as alcohol.

The adduct, which is first melted and then spray crystallized or emulsion solidified, is used as catalyst carrier.

In the next step the spray crystallized or emulsion solidified adduct of the formula $MgCl_2$*nROH, wherein R is methyl or ethyl, preferably ethyl, and n is 1 to 6, is contacting with $TiCl_4$ to form a titanised carrier, followed by the steps of

- adding to said titanised carrier

  (i) a dialkylphthalate of formula (I) with $R^1$ and $R^2$ being independently at least a $C_5$-alkyl, like at least a $C_8$-alkyl,
  or preferably
  (ii) a dialkylphthalate of formula (I) with $R^{1'}$ and $R^{2'}$ being the same and being at least a $C_5$-alkyl, like at least a $C_8$-alkyl,
  or more preferably
  (iii) a dialkylphthalate of formula (I) selected from the group consisting of propylhexylphthalate (PrHP), dioctylphthalate (DOP), di-iso-decylphthalate (DIDP), and ditridecylphthalate (DTDP), yet more preferably the dialkylphthalate of formula (I) is a dioctylphthalate (DOP), like di-iso-octylphthalate or diethylhexylphthalate, in particular diethylhexylphthalate,
  to form a first product,

- subjecting said first product to suitable transesterification conditions, i.e. to a temperature above 100 °C, preferably between 100 to 150 °C, more preferably between 130 to 150 °C, such that said methanol or ethanol is transesterified with said ester groups of said dialkylphthalate of formula (I) to form preferably at least 80 mol-%, more preferably 90 mol-%, most preferably 95 mol.-%, of a dialkylphthalate of formula (II)

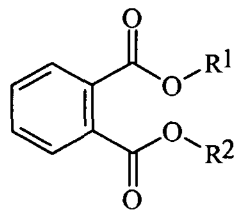

(II)

with $R^1$ and $R^2$ being methyl or ethyl, preferably ethyl,
the dialkylphthalat of formula (II) being the internal donor and

- recovering said transesterification product as the procatalyst composition (component (i)).

The adduct of the formula $MgCl_2$*nROH, wherein R is methyl or ethyl and n is 1 to 6, is in a preferred embodiment melted and then the melt is preferably injected by a gas into a cooled solvent or a cooled gas, whereby the adduct is crystallized into a morphologically advantageous form, as for example described in WO 87/07620.
This crystallized adduct is preferably used as the catalyst carrier and reacted to the procatalyst useful in the present invention as described in WO 92/19658 and WO 92/19653.
As the catalyst residue is removed by extracting, an adduct of the titanised carrier and the internal donor is obtained, in which the group deriving from the ester alcohol has changed.
In case sufficient titanium remains on the carrier, it will act as an active element of the procatalyst.
Otherwise the titanization is repeated after the above treatment in order to ensure a sufficient titanium concentration and thus activity.
Preferably the procatalyst used according to the invention contains 2.5 wt.-% of titanium at the most, preferably 2.2% wt.-% at the most and more preferably 2.0 wt.-% at the most. Its donor content is preferably between 4 to 12 wt.-% and more preferably between 6 and 10 wt.%.
More preferably the procatalyst used according to the invention has been produced by using ethanol as the alcohol and dioctylphthalate (DOP) as dialkylphthalate of formula (I), yielding diethyl phthalate (DEP) as the internal donor compound.
Still more preferably the catalyst used according to the invention is the catalyst as described in the example section; especially with the use of dioctylphthalate as dialkylphthalate of formula (I).
For the production of the heterophasic propylene copolymer (RAHECO) according to the invention the catalyst system used preferably comprises in addition to the special Ziegler-Natta procatalyst an organometallic cocatalyst as component (ii).
Accordingly it is preferred to select the cocatalyst from the group consisting of trialkylaluminium, like triethylaluminium (TEA), dialkyl aluminium chloride and alkyl aluminium sesquichloride.
Component (iii) of the catalysts system used is an external donor represented by formula (IIIa) or (IIIb). Formula (IIIa) is defined by

$$Si(OCH_3)_2R_2^5 \qquad \text{(IIIa)}$$

wherein $R^5$ represents a branched-alkyl group having 3 to 12 carbon atoms, preferably a branched-alkyl group having 3 to 6 carbon atoms, or a cyclo-alkyl having 4 to 12 carbon atoms, preferably a cyclo-alkyl having 5 to 8 carbon atoms.
It is in particular preferred that $R^5$ is selected from the group consisting of iso-propyl, iso-butyl, iso-pentyl, tert.-butyl, tert.-amyl, neopentyl, cyclopentyl, cyclohexyl, methylcyclopentyl and cycloheptyl.
Formula (IIIb) is defined by

$$Si(OCH_2CH_3)_3(NR^xR^y) \qquad \text{(IIIb)}$$

wherein $R^x$ and $R^y$ can be the same or different a represent a hydrocarbon group having 1 to 12 carbon atoms.
$R^x$ and $R^y$ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that $R^x$ and $R^y$ are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl.
More preferably both $R^x$ and $R^y$ are the same, yet more preferably both $R^x$ and $R^y$ are an ethyl group.
More preferably the external donor of formula (IIIb) is diethylaminotriethoxysilane.
More preferably the external donor is selected from the group consisting of diethylaminotriethoxysilane [$Si(OCH_2CH_3)_3(N(CH_2CH_3)_2)$], dicyclopentyl dimethoxy silane [$Si(OCH_3)_2$(cyclo-pentyl)$_2$], diisopropyl dimethoxy silane

$[Si(OCH_3)_2(CH(CH_3)_2)_2]$ and mixtures thereof. Most preferably the external donor is dicyclopentyl dimethoxy silane $[Si(OCH_3)_2(cyclo\text{-}pentyl)_2]$.

If desired the Ziegler-Natta procatalyst is modified by polymerizing a vinyl compound in the presence of the catalyst system, comprising the special Ziegler-Natta procatalyst (component (i)), the external donor (component (iii)) and optionally the cocatalyst (component (ii)), wherein the vinyl compound has the formula:

$$CH_2=CH-CHR^3R^4$$

wherein $R^3$ and $R^4$ together form a 5- or 6-membered saturated, unsaturated or aromatic ring or independently represent an alkyl group comprising 1 to 4 carbon atoms. The so modified catalyst is used for the preparation of the heterophasic propylene copolymer (RAHECO) according to this invention.

In the following the polymers produced and products obtained in the individual steps are defined in more detail.

As stated above in the first two reactors ((R1) and (R2)) the matrix (M), i.e. the random propylene copolymer (R-PP) is produced. More precisely, in the first reactor (R1) the first random propylene copolymer fraction (R-PP1) is produced whereas in the second reactor (R2) the second random propylene copolymer fraction (R-PP2).

The preferred comonomers used in the first reactor (R1) are comonomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably the comonomers used in the first reactor (R1) are selected from the group consisting of ethylene, 1-butene and 1-hexene. More specifically comonomers used in the first reactor (R1) are ethylene and/or 1-butene. Thus in an especially preferred in the first reactor (R1) only propylene and ethylene are fed.

As a consequence thereof the random propylene copolymer fraction (R-PP1) comprises comonomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably the random propylene copolymer fraction (R-PP1) comprises, especially consists of, monomers copolymerizable with propylene from the group consisting of ethylene, 1-butene and 1-hexene. More specifically the random propylene copolymer fraction (R-PP1) comprises - apart from propylene - units derivable from ethylene and/or 1-butene. Thus in an especially preferred embodiment the random propylene copolymer fraction (R-PP1) comprises units derivable from ethylene and propylene only.

Accordingly in the first reactor (R1) a first random propylene copolymer fraction (R-PP1) is produced having a comonomer content of equal or below 5.5 wt.-%, more preferably of equal or below 4.0 wt.-%, yet more preferably in the range 0.5 to 5.5 wt.-%, still more preferably in the range 0.5 to 4.0 wt.-%, like in the range of 1.0 to 3.5 wt.-%.

Further the first random propylene copolymer fraction (R-PP1), i.e. the polymer of the first reactor (R1), has preferably a xylene cold soluble (XCS) fraction of equal or below than 11.0 wt.-%, more preferably in the range of 3.0 to 10.0 wt.-%, still more preferably in the range of 4.0 to 9.0 wt.-%, yet more preferably in the range of 5.0 to 8.0 wt.-%.

Preferably the first random propylene copolymer fraction (R-PP1) preferably has a melt flow rate $MFR_2$ (230 °C) in the range of in the range of 0.3 to 3.5 g/10min, more preferably in the range 1.0 to 3.0 g/10min.

In the second rector (R2) the second random propylene copolymer fraction (R-PP2) is produced obtaining thereby the random propylene copolymer (R-PP). Preferably the weight ratio between the first random propylene copolymer fraction (R-PP1) and the second random propylene copolymer fraction (R-PP2) is 20/80 to 80/20, more preferably 30/70 to 70/30.

The preferred comonomers used in the second reactor (R2) are the same as indicated above, for the first reactor (R1). Thus reference is made to the information provided for the first random propylene copolymer fraction (R-PP1). Accordingly especially preferred comonomers used in the second reactor (R2) are ethylene, 1-butene and 1-hexene. In one specific embodiment the comonomer is ethylene only. It is in particular preferred that in the first reactor (R1) and in the second reactor (R2) the same comonomers are fed, like ethylene.

Accordingly the second random propylene copolymer fraction (R-PP2) and/or the random propylene copolymer (R-PP) comprise(s) monomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably the second random propylene copolymer fraction (R-PP2) and/or the random propylene copolymer (R-PP) comprise(s), especially consist(s) of, monomers copolymerizable with propylene from the group consisting of ethylene, 1-butene and 1-hexene. More specifically the second random propylene copolymer fraction (R-PP2) and/or the random propylene copolymer (R-PP) comprise(s) - apart from propylene - units derivable from ethylene and/or 1-butene. In a preferred embodiment the second random propylene copolymer fraction (R-PP2) and/or the random propylene copolymer (R-PP) comprise(s) units derivable from ethylene and propylene only.

It is preferred that the first propylene copolymer fraction (R-PP1) is the comonomer lean fraction whereas the second propylene copolymer fraction (R-PP2) is the comonomer rich fraction. Accordingly, the second random propylene copolymer fraction (R-PP2) preferably has comonomer content of at least 0.5 wt.-%, more preferably in the range 0.5 to 20.0 wt.-%, still more preferably in the range 2.0 to 19.0 wt.-%, yet more preferably in the range 2.4 to 18.0 wt.-%.

Thus the overall comonomer content in the second reactor (R2), i.e. the comonomer content of the random

propylene copolymer (R-PP), is at least 1.0 wt.-%, more preferably at least 2.0 wt.-%, still more preferably in the range of 1.0 to 9.0 wt.-%, yet more preferably in the range of 1.5 to 8.0 wt.-%, still more preferably in the range of 2.0 to 7.0 wt.-%, like in the range of 2.1 to 6.5 wt.-%.

Further the second random propylene copolymer fraction (R-PP2), i.e. the polymer produced in the second reactor (R2), preferably has a xylene cold soluble (XCS) fraction of below 40 wt.-%, more preferably in the range of 2 to 35 wt.-%, yet more preferably in the range of 3 to 30 wt.-%.

Accordingly the overall xylene cold soluble (XCS) content in the second reactor, i.e. the xylene cold soluble (XCS) fraction of the random propylene copolymer (R-PP), preferably is in the range of 2.0 to 15.0 wt.-%, still more preferably is in the range of 3.0 to 12.0 wt.-%, yet more preferably is in the range of 3.0 to 10.0 wt.-%.

Additionally it is appreciated that the second random propylene copolymer fraction (R-PP2), i.e. the polymer produced in the second reactor (R2), preferably has a melt flow rate $MFR_2$ (230 °C) in the range of 0.1 to 3.5 g/10min, more preferably in the range of 0.5 to 3.0 g/10min.

Accordingly the overall melt flow rate $MFR_2$ (230 °C) in the second reactor, i.e. the melt flow rate $MFR_2$ (230 °C) of the random propylene copolymer (R-PP), preferably is in the range of 0.3 to 3.5 g/10min, more preferably in the range of 0.5 to 3.0 g/10min, like 1.0 to 2.5 g/10min.

Thus after the second reactor (R2) the matrix (M), i.e. the random propylene copolymer (R-PP), of the propylene copolymer, i.e. the heterophasic propylene copolymer (RAHECO), is obtained. This matrix (M) is subsequently transferred into the third reactor (R3) in which the first fraction (E-1) of the elastomeric propylene copolymer (E) is produced (step (e)). Thereby a first intimate mixture (IM) is obtained.

The preferred comonomers used in the third reactor (R3) are the same as indicated above, for the first reactor (R1). Accordingly especially preferred comonomers are ethylene, 1-butene and 1-hexene. In one specific embodiment the comonomer is ethylene. It is especially preferred that in the three reactors (R1) to (R3) the same comonomers, like ethylene, are used.

The obtained first intimate mixture (IM) comprises the matrix (M) in which the first fraction (E-1) of the elastomeric propylene copolymer (E) is dispersed. Said intimate mixture (IM) has preferably a comonomer content which is higher than the comonomer content of the second reactor (R2). Thus it is preferred that the comonomer content of the first intimate mixture (IM), i.e. after step (e)), is in the range of 6.0 to 12.0 wt.-%, more preferably in the range of 7.0 to 11.0 wt.-%, yet more preferably in the range of 7.5 to 10.5 wt.-%.

Another characteristic feature of the intimate mixture (IM) is its xylene cold soluble (XCS) content. Accordingly it is appreciated that the intimate mixture (IM) has xylene cold soluble (XCS) fraction in the range of 20 to 45 wt.-%, yet more preferably in the range of 25 to 40 wt.-%, still yet more preferably in the range 30 to 38 wt.-%.

The comonomer content in the xylene cold soluble fraction (XCS) of the intimate mixture (IM) preferably is in the range of 14.0 to 27.0 wt.-%, yet more preferably in the range of 15.0 to 25.0 wt.-%.

In step (f) the intimate mixture (IM) is transferred into the fourth reactor (R4). In the fourth reactor (R4) the second fraction (E-2) of the elastomeric propylene copolymer (E) is produced (step (g)). Accordingly in the reactors (R3) and (R4) the elastomeric propylene copolymer (E) is produced and the so obtained polymer mixture is the heterophasic propylene copolymer (RAHECO) of the instant invention.

The comonomer content of the elastomeric propylene copolymer (E), i.e. the polymer produced in (R3) and (R4) together, preferably is not more than 25.0 wt.-%, more preferably not more than 22 wt.-%, still more preferably in the range of 14.0 to 25.0 wt.-%, yet more preferably in the range of 16.0 to 22.0 wt.-%.

The preferred comonomers used in the fourth reactor (R4) are the same as indicated above for the first reactor (R1). Accordingly the elastomeric propylene copolymer (E) obtained in the reactors (R3) and (R4) comprises monomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably the elastomeric propylene copolymer (E) obtained in the reactors (R3) and (R4) comprises, especially consists of, monomers copolymerizable with propylene from the group consisting of ethylene, 1-butene and 1-hexene. More specifically the elastomeric propylene copolymer (E) obtained in the reactors (R3) and (R4) comprises - apart from propylene - units derivable from ethylene and/or 1-butene. Thus in an especially preferred embodiment the elastomeric propylene copolymer (E) obtained in the reactors (R3) and (R4) comprises units derivable from ethylene and propylene only. It is especially preferred that the random propylene copolymer (R-PP) and the elastomeric propylene copolymer (E) comprises the same comonomers. Accordingly in one specific embodiment the random propylene copolymer (R-PP) and the elastomeric propylene copolymer (E) comprise propylene and ethylene only. Accordingly it is especially preferred that in the four reactors (R1) to (R4) the same comonomers, like ethylene, are used.

The total comonomer content after step (g), i.e. of the heterophasic propylene copolymer (RAHECO), is in the range of 7.5 to 12.0 wt.-%, more preferably in the range of 8.0 to 11.0 wt.-%, yet more preferably in the range of 8.2 to 10.5 wt.-%.

Further the comonomer ratio of the total heterophasic propylene copolymer (RAHECO) after step (g) and/or (i) and of the matrix (M), i.e. of the random propylene copolymer (R-PP), are characterizing for this invention. Thus it is

appreciated that the inequation (I), more preferably the inequation (Ia), yet more preferably the inequation (Ib), still more preferably the inequation (Ic), still yet more preferably the inequation (Id), are fulfilled, wherein

$$\frac{Co\ (total)}{Co\ (RPP)} \geq 1.1, \qquad \text{(I)}$$

$$\frac{Co\ (total)}{Co\ (RPP)} \geq 1.2, \qquad \text{(Ia)}$$

$$5.0 \geq \frac{Co\ (total)}{Co\ (RPP)} \geq 1.1, \text{(Ib)}$$

$$4.5 \geq \frac{Co\ (total)}{Co\ (RPP)} \geq 1.2, \text{(Ic)}$$

$$4.4 \geq \frac{Co\ (total)}{Co\ (RPP)} \geq 1.5, \text{(Id)}$$

wherein further

Co (total) is the comonomer content [wt.-%] of the heterophasic propylene copolymer (RAHECO) after step (g) and/or (i),

Co (RPP) is the comonomer content [wt.-%] of the random propylene copolymer (R-PP).

The heterophasic propylene copolymer (RAHECO) after step (g) and/or (i) can be further defined by the amount of comonomers of the xylene cold soluble (XCS) fraction versus the comonomer content of the total heterophasic propylene copolymer (RAHECO). The xylene cold soluble (XCS) fraction of the instant invention is determined according to ISO 16152 (25 °C). Accordingly it is preferred that the heterophasic propylene copolymer (RAHECO) after step (g) fulfills inequation (II), more preferably inequation (IIa), yet more preferably inequation (IIb), still more preferably inequation (IIc)

$$\frac{Co\ (total)}{Co\ (XCS)} \leq 0.70, \qquad \text{(II)},$$

$$\frac{Co\ (total)}{Co\ (XCS)} \leq 0.60, \qquad \text{(IIa)}$$

$$0.30 \leq \frac{Co\ (total)}{Co\ (XCS)} \leq 0.70, \qquad \text{(IIb)}$$

$$0.35 \leq \frac{Co\ (total)}{Co\ (XCS)} \leq 0.60, \qquad \text{(IIc)}$$

wherein

Co (total) is the comonomer content [wt.-%] of the heterophasic propylene copolymer (RAHECO) after step (g) and/or (i),

Co (XCS) is the comonomer content [wt.-%] of the xylene cold soluble fraction (XCS) of the propylene copolymer.

Thus it is appreciated that the comonomer content of the xylene cold soluble fraction (XCS) of the heterophasic propylene copolymer (RAHECO) after step (g) and/or (i) is in the range of 16.0 to 28.0 wt.-%, yet more preferably in the range of 17.0 to 25.5 wt.-%, still more preferably in the range of 18.0 to 25.0 wt.-%, still yet more preferably in the range of 18.5 to 24.5 wt.-%.

Concerning the comonomers present in the xylene cold soluble fraction (XCS) it is referred to the information provided for the random propylene copolymer fraction (R-PP1). Accordingly in a specific embodiment the xylene cold soluble fraction (XCS) comprises, especially consists of, monomers copolymerizable with propylene from the group consisting of ethylene, 1-butene and 1-hexene. More specifically the xylene cold soluble fraction (XCS) comprises - apart from propylene - units derivable from ethylene and/or 1-butene. In a preferred embodiment the xylene cold soluble fraction (XCS) comprises units derivable from ethylene and propylene only.

The amount of xylene cold solubles (XCS) in the intimate mixture (IM) and in the heterophasic propylene copolymer (RAHECO) after step (g) is more or less the same. The same holds true for the intrinsic viscosities of the respective xylene cold soluble (XCS) fractions.

Accordingly the heterophasic propylene copolymer (RAHECO) after step (g) has xylene cold soluble (XCS) fraction in the range of 20 to 45 wt.-%, wt.-%, yet more preferably in the range of 25 to 42 wt.-%, still yet more preferably in the range 30 to 40 wt.-%.

Further the intrinsic viscosity (IV) measured according to ISO 1628/1 (at 135 °C in decalin) of the xylene cold soluble fraction (XCS) of the heterophasic propylene copolymer (RAHECO) after step (g) is preferably of equal or below 3.7 dl/g, more preferably in the range of 1.5 to equal or below 3.7 dl/g, still more preferably in the range of 1.8 to equal or below 3.5 dl/g.

The remaining part of the heterophasic propylene copolymer (RAHECO) after step (g) and/or (i) which is not soluble in cold xylene is therefore the cold insoluble fraction (XCI). below.

Accordingly it is preferred that the comonomer content in the cold insoluble fraction (XCI) of the heterophasic propylene copolymer (RAHECO) after step (g) and/or (i) is in the range of 1.5 to 6.0 wt.-%, yet more preferably in the range of 2.0 to 5.5 wt.-%, still more preferably in the range of 2.5 to 5.5 wt.-%, still yet more preferably in the range of 3.0 to 5.0 wt.-%.

Further it is appreciated that the xylene cold insoluble fraction (XCI) of the heterophasic propylene copolymer (RAHECO) after step (g) has an intrinsic viscosity (IV) measured according to ISO 1628/1 (at 135 °C in decalin) of equal or above 1.6 dl/g, more preferably of in the range of 1.8 to below 3.0 dl/g, still more preferably in the range of 1.9 to 2.8 dl/g.

Accordingly it is preferred the intrinsic viscosity in the xylene cold soluble (XCS) fraction and on the xylene cold insoluble (XCI) fraction are rather similar. Thus it is preferred that the heterophasic propylene copolymer (RAHECO) after step (g) fulfills inequation (III) more preferably inequation (IIIa),

$$0.60 \leq \frac{IV\ (XCS)}{IV\ (XCI)} \leq 1.50 \qquad \text{(III)}$$

$$0.70 \leq \frac{IV\ (XCS)}{IV\ (XCI)} \leq 1.40 \qquad \text{(IIIa)}$$

wherein

IV (XCS) is the intrinsic viscosity (IV) [dl/g] of the xylene cold soluble (XCS) of the heterophasic propylene copolymer (RAHECO) after step (g),

IV (XCI) is the intrinsic viscosity (IV) [dl/g] of the xylene cold insoluble (XCI) of the heterophasic propylene copolymer (RAHECO) after step (g).

Additionally it is appreciated that the heterophasic propylene copolymer (RAHECO) after step (g) has a melt flow rate $MFR_2$ (230 °C) in the range of 0.5 to 3.0 g/10min, like 0.5 to 2.5 g/10min.

Preferably it is desired that the heterophasic propylene copolymer (RAHECO) after step (g) is thermo mechanically stable, so that for instance a thermal sterilization process can be accomplished. Accordingly it is appreciated that the heterophasic propylene copolymer (RAHECO) after step (g) has a melting temperature of at least 145 °C, more preferably in the range of 145 to 160 °C, still more preferably in the range of 150 to 159 °C, like in the range of 150 to 158 °C.

Preferably the weight ratio between the matrix (M), i.e. the random propylene copolymer (R-PP), after step (c) and the elastomeric propylene copolymer (E) produced in the steps (e) to (g) is 45/55 to 80/20, more preferably 50/50 to 70/30.

After step (g) the heterophasic propylene copolymer (RAHECO) can be optionally subjected a visbreaking step

(step (i)) obtaining thereby a heterophasic propylene copolymer (RAHECO) with enhanced melt flow rate. The visbreaking may be carried out in any known manner, but typically the present invention envisages chemical visbreaking using a peroxide visbreaking agent. Typical visbreaking agents are 2,5-dimethyl-2,5-bis(tert.butyl-peroxy)hexane (DHBP) (for instance sold under the tradenames Luperox 101 and Trigonox 101), 2,5-dimethyl-2,5-bis(tert.butyl-peroxy)hexyne-3 (DYBP) (for instance sold under the tradenames Luperox 130 and Trigonox 145), dicumyl-peroxide (DCUP) (for instance sold under the tradenames Luperox DC and Perkadox BC), di-tert.butyl-peroxide (DTBP) (for instance sold under the tradenames Trigonox B and Luperox Di), tert.butyl-cumyl-peroxide (BCUP) (for instance sold under the tradenames Trigonox T and Luperox 801) and bis (tert.butylperoxy-isopropyl)benzene (DIPP) (for instance sold under the tradenames Perkadox 14S and Lupperox DC). Suitable amounts of peroxide to be employed in accordance with the present invention are in principle known to the skilled person and can easily be calculated on the basis of the amount of the heterophasic propylene copolymer (RAHECO) after step (g) to be subjected to visbreaking, the $MFR_2$ (230 °C) value of the propylene copolymer of step (g) to be subjected to visbreaking and the desired target $MFR_2$ (230 °C) of the product to be obtained. Accordingly, typical amounts of peroxide visbreaking agent are from 0.005 to 0.5 wt.-%, more preferably from 0.005 to 0.2 wt.-%, based on the amount of propylene copolymer employed.

Typically, visbreaking in accordance with the present invention is carried out in an extruder, so that under the suitable conditions, an increase of melt flow rate is obtained. During visbreaking, higher molar mass chains of the starting product are broken statistically more frequently than lower molar mass molecules, resulting in an overall decrease of the average molecular weight and an increase in melt flow rate.

Due to the visbreaking the melt flow rate and the intrinsic viscosity (IV) of the xylene cold soluble (XCS) fraction of the heterophasic propylene copolymer (RAHECO) are affected. On the other hand the melting temperature, the amount of the xylene cold soluble (XCS) fraction, the total comonomer content and the comonomer content of the xylene cold soluble (XCS) fraction of the heterophasic propylene copolymer (RAHECO) are not affected. Thus the non-visbroken heterophasic propylene copolymer (RAHECO) (after step (g)) and the visbroken heterophasic propylene copolymer (RAHECO) (after step (i)) have the same melting temperature, the amount of the xylene cold soluble (XCS) fraction, the same total comonomer content and the same comonomer content of the xylene cold soluble (XCS) fraction. Thus with regard to these embodiments reference is made to the information provided above, including the inequations (I) and (II).

The visbroken heterophasic propylene copolymer (RAHECO) preferably has a higher melt flow rate than the non-visbroken heterophasic propylene copolymer (RAHECO). Accordingly the heterophasic propylene copolymer (RAHECO) after step (i) preferably has a melt flow rate $MFR_2$ (230 °C) in the range of 2.5 to 12.0 g/10 min, more preferably in the range of 2.5 to 10.0 g/10min, still more preferably in the range of 2.5 to 8.5 g/10min.

Preferably the xylene cold soluble fraction (XCS) of the heterophasic propylene copolymer (RAHECO) after step (i) has an intrinsic viscosity (IV) measured according to ISO 1628/1 (at 135 °C in decalin) of equal or above 1.8 dl/g, more preferably of in the range of 1.8 to equal or below 2.7 dl/g, still more preferably in the range of 1.9 to 2.6 dl/g, like in the range of 2.0 to 2.5 dl/g.

Further it is appreciated that the xylene cold insoluble fraction (XCI) of the heterophasic propylene copolymer (RAHECO) after step (i) has an intrinsic viscosity (IV) measured according to ISO 1628/1 (at 135 °C in decalin) of equal or above 1.8 dl/g, more preferably of in the range of 1.8 to equal or below 2.7 dl/g, still more preferably in the range of 1.9 to 2.6 dl/g, like in the range of 2.0 to 2.5 dl/g.

Accordingly it is preferred the intrinsic viscosity in the xylene cold soluble (XCS) fraction and on the xylene cold insoluble (XCI) fraction of the heterophasic propylene copolymer (RAHECO) after step (i) are rather similar. Thus it is preferred that the heterophasic propylene copolymer (RAHECO) after step (i) fulfills inequation (IV) more preferably inequation (IVa), yet more preferably inequation (IVb),

$$0.80 \leq \frac{IV\ (XCS)}{IV\ (XCI)} \leq 1.30 \qquad \text{(IV)}$$

$$0.85 \leq \frac{IV\ (XCS)}{IV\ (XCI)} \leq 1.25 \qquad \text{(IVa)}$$

$$0.90 \leq \frac{IV\ (XCS)}{IV\ (XCI)} \leq 1.20 \qquad \text{(IVb)}$$

wherein

IV (XCS) is the intrinsic viscosity (IV) [dl/g] of the xylene cold soluble (XCS) of the propylene copolymer,

IV (XCI) is the intrinsic viscosity (IV) [dl/g] of the xylene cold insoluble (XCI) of the propylene copolymer.

The heterophasic propylene copolymer (RAHECO) after step (g) and/or step (i) is especially further featured by its specific optical and mechanical properties. The following properties apply in particular for the heterophasic propylene copolymer (RAHECO) after step (i).

Accordingly it is preferred that the heterophasic propylene copolymer (RAHECO) after step (g) and/or step (i) has a flexural modulus measured according to ISO 178 of not more than 600 MPa, more preferably in the range of 200 to 600 MPa, more preferably in the range of 250 to 550 MPa.

In one preferred embodiment the heterophasic propylene copolymer (RAHECO) after step (g) and/or step (i)has a good impact behavior. Accordingly it is preferred that the heterophasic propylene copolymer (RAHECO) after step (g) and/or step (i) has

(a) an impact strength determined according to ISO 179 / 1eA at 23 °C of at least 60.0 kJ/$m^2$, more preferably in the range of 60.0 to 95.0 kJ/$m^2$, yet more preferably in the range of 63.0 to 90.0 kJ/$m^2$,
and/or
(b) an impact strength determined according to ISO 179 / 1eA at -20 °C of at least 4.5 kJ/$m^2$, more preferably in the range of 4.5 to 8.0 kJ/$m^2$, yet more preferably in the range of 4.6 to 7.5 kJ/$m^2$.

Additionally and/or alternatively the heterophasic propylene copolymer (RAHECO) after step (g) and/or step (i) preferably has

(a) a haze before sterilization determined according to ASTM D 1003-07 (60x60x1 $mm^3$ injection moulded plaques) of below 50 %, more preferably 20 to below 50 %, yet more preferably 25 to below 50 %,
and/or

(b) a haze after sterilization determined according to ASTM D 1003-07 (60x60x1 $mm^3$ injection moulded plaques) of below 65 %, more preferably 25 to below 65 %, yet more preferably 35 to 62 %.
and/or

(c) a haze before sterilization determined according to ASTM D1003-00 (50 $\mu$m cast film) below 15 %, more preferably 5 to below 15 %, yet more preferably 6 to 12 %,
and/or

(d) a haze after sterilization determined according to ASTM D 1003-00 (50 $\mu$m cast film) of below 20 %, more preferably 8 to below 20 %, yet more preferably 10 to 16 %.

The heterophasic propylene copolymer (RAHECO) as defined in the instant invention may contain up to 1.0 wt.-% additives, like nucleating agents and antioxidants, as well as slip agents and ant blocking agents. Preferably the additive content is below 5.0 wt.-%, preferably below 3.0 wt.-%, like below 1.0 wt.-%.

The additives as stated above are added prior or after visbreaking (prior or after step (i)) to the heterophasic propylene copolymer (RAHECO). Preferably, these additives are mixed into the heterophasic propylene copolymer (RAHECO) prior to visbreaking. In another preferred embodiment the additives and the degrading agent (peroxide) are added in step (i), i.e. in the extrusion / mixing process, preferably into a co-rotating twin screw extruder as mentioned below.

For mixing, a conventional compounding or blending apparatus, e.g. a Ban bury mixer, a 2-roll rubber mill, Buss-co-kneader or a twin screw extruder may be used. The polymer materials recovered from the extruder are usually in the form of pellets. These pellets are then further processed, e.g. by film forming process as described below.

After step (g) or (i) the heterophasic propylene copolymer (RAHECO) can be converted into articles, like films, molded articles, like injection molded or blow molded article.

In the following the present invention is further illustrated by means of examples.

## EXAMPLES

### 1. Measuring methods

The following definitions of terms and determination methods apply for the above general description of the invention as well as to the below examples unless otherwise defined.

**Calculation** of comonomer content of the second propylene copolymer fraction (R-PP2):

$$\frac{C(PP) - w(PP1)x\,C(PP1)}{w(PP2)} = C(PP2) \quad (I)$$

wherein

w(PP1) is the weight fraction [in wt.-%] of the first propylene copolymer fraction (R-PP1),
w(PP2) is the weight fraction [in wt.-%] of second propylene copolymer fraction (R-PP2),
C(PP1) is the comonomer content [in wt.-%] of the first propylene copolymer fraction (R-PP1),
C(PP) is the comonomer content [in wt.-%] of the random propylene copolymer (R-PP),
C(PP2) is the calculated comonomer content [in wt.-%] of the second propylene copolymer fraction (R-PP2).

**Calculation** of the xylene cold soluble (XCS) content of the second propylene copolymer fraction (R-PP2):

$$\frac{XS(PP) - w(PP1)x\,XS(PP1)}{w(PP2)} = XS(PP2) \quad (II)$$

wherein

w(PP1) is the weight fraction [in wt.-%] of the first propylene copolymer fraction (R-PP1),
w(PP2) is the weight fraction [in wt.-%] of second propylene copolymer fraction (R-PP2),
XS(PP1) is the xylene cold soluble (XCS) content [in wt.-%] of the first propylene copolymer fraction (R-PP1),
XS(PP) is the xylene cold soluble (XCS) content [in wt.-%] of the random propylene copolymer (R-PP),
XS(PP2) is the calculated xylene cold soluble (XCS) content [in wt.-%] of the second propylene copolymer fraction (R-PP2), respectively.

**Calculation** of melt flow rate $MFR_2$ (230 °C) of the second propylene copolymer fraction (R-PP2):

$$MFR(PP2) = 10^{\left[\frac{\log(MFR(PP)) - w(PP1)\,x\,\log(MFR(PP1))}{w(PP2)}\right]} \quad (III)$$

wherein

w(PP1) is the weight fraction [in wt.-%] of the first propylene copolymer fraction (R-PP1),
w(PP2) is the weight fraction [in wt.-%] of second propylene copolymer fraction (R-PP2),
MFR(PP1) is the melt flow rate $MFR_2$ (230 °C) [in g/10min] of the first propylene copolymer fraction (R-PP1),
MFR(PP) is the melt flow rate $MFR_2$ (230 °C) [in g/10min] of the random propylene copolymer (R-PP),
MFR(PP2) is the calculated melt flow rate $MFR_2$ (230 °C) [in g/10min] of the second propylene copolymer fraction (R-PP2).

**Calculation** of comonomer content of the elastomeric propylene copolymer (E), respectively:

$$\frac{C(RAHECO) - w(PP)x\,C(PP)}{w(E)} = C(E) \quad (IV)$$

wherein

w(PP) is the weight fraction [in wt.-%] of the random propylene copolymer (R-PP), i.e. polymer produced in the first and second reactor (R1 + R2),
w(E) is the weight fraction [in wt.-%] of the elastomeric propylene copolymer (E), i.e. polymer produced in the third and fourth reactor (R3 + R4)
C(PP) is the comonomer content [in wt.-%] of the random propylene copolymer (R-PP), i.e. comonomer content [in wt.-%] of the polymer produced in the first and second reactor (R1 + R2),
C(RAHECO) is the comonomer content [in wt.-%] of the propylene copolymer, i.e. is the comonomer content [in wt.-%] of the polymer obtained after polymerization in the fourth reactor (R4),

C(E) is the calculated comonomer content [in wt.-%] of elastomeric propylene copolymer (E), i.e. of the polymer produced in the third and fourth reactor (R3 + R4).

**$MFR_2$ (230 °C)** is measured according to ISO 1133 (230 °C, 2.16 kg load).

**Number average molecular weight ($M_n$), weight average molecular weight ($M_w$) and molecular weight distribution (MWD)**
are determined by Gel Permeation Chromatography (GPC) according to the following method:

The weight average molecular weight Mw and the molecular weight distribution (MWD = Mw/Mn wherein Mn is the number average molecular weight and Mw is the weight average molecular weight) is measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/L 2,6-Di tert butyl-4-methylphenol) as solvent at 145 °C and at a constant flow rate of 1 mL/min. 216.5 μL of sample solution were injected per analysis. The column set was calibrated using relative calibration with 19 narrow MWD polystyrene (PS) standards in the range of 0.5 kg/mol to 11 500 kg/mol and a set of well characterized broad polypropylene standards. All samples were prepared by dissolving 5 - 10 mg of polymer in 10 mL (at 160 °C) of stabilized TCB (same as mobile phase) and keeping for 3 hours with continuous shaking prior sampling in into the GPC instrument.

**Comonomer content**, especially ethylene content is measured with Fourier transform infrared spectroscopy (FTIR) calibrated with $^{13}C$-NMR. When measuring the ethylene content in polypropylene, a thin film of the sample (thickness about 250 μm) was prepared by hot-pressing. The area of absorption peaks 720 and 733 $cm^{-1}$ for propylene-ethylene-copolymers was measured with Perkin Elmer FTIR 1600 spectrometer. Propylene-1-butene-copolymers were evaluated at 767 $cm^{-1}$. The method was calibrated by ethylene content data measured by $^{13}C$-NMR. See also "IR-Spektroskopie für Anwender"; WILEY-VCH, 1997 and "Validierung in der Analytik", WILEY-VCH, 1997

**Flexural Modulus**: The flexural modulus was determined in 3-point-bending at 23°C according to ISO 178 on 80x10x4 $mm^3$ test bars injection moulded in line with EN ISO 1873-2.

**Charpy notched impact strength** is determined according to ISO 179 / 1eA at 23 °C and at -20 °C by using injection moulst specimens as described in EN ISO 1873-2 (80 x 10 x 4 mm).

**Intrinsic viscosity** is measured according to DIN ISO 1628/1, October 1999 (in Decalin at 135 °C).

**The xylene solubles (XCS, wt.-%):** Content of xylene cold solubles (XCS) is determined at 25 °C according ISO 16152; first edition; 2005-07-01. The part which remains insoluble is the xylene cold insoluble (XCI) fraction.

**Melting temperature ($T_m$) and heat of fusion ($H_f$), crystallization temperature ($T_c$) and heat of crystallization ($H_c$)**: measured with Mettler TA820 differential scanning calorimetry (DSC) on 5 to 10 mg samples. DSC is run according to ISO 3146 / part 3 /method C2 in a heat / cool / heat cycle with a scan rate of 10 °C/min in the temperature range of +23 to +210°C. Crystallization temperature and **heat of crystallization** ($H_c$) are determined from the cooling step, while melting temperature and heat of fusion ($H_f$) are determined from the second heating step

**Haze, transparency and clarity** were determined according to ASTM D 1003-07on 60x60x1 $mm^3$ plaques injection moulded in line with EN ISO 1873-2 using a melt temperature of 200°C. Steam sterilization was performed as described below.

**Haze, transparency and clarity** were determined according to ASTM D1003-00 on cast films of 50 μm thickness produced on a monolayer cast film line with a melt temperature of 220°C and a chill roll temperature of 15°C.

## 2. Examples

The catalyst used in the polymerization process for examples for examples E1 to E3, CE1 to CE3 has been produced as follows: First, 0.1 mol of $MgCl_2$ x 3 EtOH was suspended under inert conditions in 250 ml of decane in a reactor at atmospheric pressure. The solution was cooled to the temperature of -15°C and 300 ml of cold $TiCl_4$ was added while maintaining the temperature at said level. Then, the temperature of the slurry was increased slowly to 20 °C. At this temperature, 0.02 mol of dioctylphthalate (DOP) was added to the slurry. After the addition of the phthalate, the temperature was raised to 135 °C during 90 minutes and the slurry was allowed to stand for 60 minutes. Then, another 300 ml of $TiCl_4$ was added and the temperature was kept at 135 °C for 120 minutes. After this, the catalyst was filtered from the liquid and washed six times with 300 ml heptane at 80 °C. Then, the solid catalyst component was filtered and dried. Catalyst and its preparation concept is described in general e.g. in patent publications EP491566, EP591224 and EP586390. As co-catalyst triethyl-aluminium (TEAL) and as donor dicyclo pentyl dimethoxy silane (D-donor) was used. The aluminium to donor ratio is indicated in tables 1 (a) and 1 (b). The resulting polymers were visbroken in a co-rotating twin-screw extruder (type: Coperion ZSK 57) with suitable amounts of 2,5-dimethyl-2,5-di-(tert. butylperoxy)hexane (Trigonox® 101 supplied by AKZO Nobel, Netherlands) added to the extruder as concentrate of 1 wt.-%

on polypropylene powder. As additives 0.04 wt.% synthetic hydrotalcite (DHT-4A supplied by Kisuma Chemicals, Netherlands) and 0.15 wt% Irganox B 215 (1:2-blend of Irganox 1010 (Pentaerythrityl-tetrakis(3-(3',5'-di-tert.butyl-4-hydroxytoluyl)-propionate and tris (2,4-di-t-butylphenyl) phosphate) phosphite) of BASF AG, Germany were added to the polymers in the same step.

Steam sterilization was performed in a Systec D series machine (Systec Inc., USA). The samples were heated up at a heating rate of 5 °C/min starting from 23°C. After having been kept for 30 min at 121°C, they were removed immediately from the steam sterilizer and stored at room temperature till processed further.

**Table 1 (a):** Polymerization conditions (Comperative Examples)

| | | **CE1** | **CE2** | **CE3** |
|---|---|---|---|---|
| TEAL/D | [mol/mol] | 15 | 15 | 15 |
| **Loop** | | | | |
| $MFR_2$ | [g/10min] | 2.7 | 2.1 | 2.1 |
| C2 content | [wt.-%] | 1.7 | 1.7 | 1.8 |
| XCS | [wt.-%] | 5.3 | 5.1 | 5.5 |
| $H_2$/C3 ratio | [mol/kmol] | 1.70 | 1.5 | 1.6 |
| C2/C3 ratio | [mol/kmol] | 3.5 | 4.3 | 3.4 |
| **1 GPR** | | | | |
| $MFR_2$ | [g/10min] | 3.7 | 2.0 | 2.4 |
| C2 content | [wt.-%] | 2.1 | 2.0 | 2.1 |
| XCS | [wt.-%] | 4.7 | 5.1 | 5.0 |
| $H_2$/C3 ratio | [mol/kmol] | 28.9 | 19.4 | 27.7 |
| C2/C3 ratio | [mol/kmol] | 15.5 | 14.8 | 15.6 |
| **2 GPR** | | | | |
| $MFR_2$ | [g/10min] | 1.8 | 1.3 | 1.7 |
| C2 content | [wt.-%] | 10.5 | 7.4 | 9.9 |
| XCS | [wt.-%] | 29.1 | 19.8 | 28.4 |
| C2 of XCS | [wt.-%] | 19.4 | 30.0 | 28.0 |
| IV of XCS | [dl/g] | 2.3 | 3.4 | 2.0 |
| $H_2$/C3 ratio | [mol/kmol] | 177 | 90 | 197 |
| C2/C3 ratio | [mol/kmol] | 306 | 296 | 290 |
| **3 GPR** | | | | |
| $MFR_2$ | [g/10min] | 1.2 | 1.4 | 1.4 |
| C2 content | [wt.-%] | 13.9 | 9.4 | 11.7 |
| XCS | [wt.-%] | 40.7 | 26.0 | 35.0 |
| C2 of XCS | [wt.-%] | 28.0 | 29.0 | 29.0 |
| IV of XCS | [dl/g] | 2.3 | 3.4 | 2.0 |
| $H_2$/C3 ratio | [mol/kmol] | 179 | 95 | 192 |
| C2/C3 ratio | [mol/kmol] | 309 | 300 | 293 |
| **Split** | | | | |
| Loop | [wt.-%] | 28.4 | 38.1 | 30.2 |
| 1GPR | [wt.-%] | 36.6 | 34.1 | 34.3 |

(continued)

| Split | | | | |
|---|---|---|---|---|
| (2GPR+3GPR) | [wt.-%] | 35.0 | 27.9 | 35.5 |
| **Visbreaking** | | | | |
| POX | [wt.-%] | - | 0.012 | 0.010 |
| $MFR_2$ | [g/10min] | 1.2 | 3.9 | 4.0 |

**Table 1 (b):** Polymerization conditions (Inventive Examples)

| | | E1 | E2 | E3 |
|---|---|---|---|---|
| TEAL/D | [mol/mol] | 15 | 15 | 15 |
| **Loop** | | | | |
| $MFR_2$ | [g/10min] | 2.3 | 2.4 | 1.5 |
| C2 content | [wt.-%] | 2.4 | 1.9 | 2.4 |
| XCS | [wt.-%] | 6.8 | 6.8 | 6.8 |
| $H_2$/C3 ratio | [mol/kmol] | 1.6 | 1.5 | 0.9 |
| C2/C3 ratio | [mol/kmol] | 3.2 | 3.4 | 4.1 |
| **1 GPR** | | | | |
| $MFR_2$ | [g/10min] | 1.7 | 1.5 | 1.5 |
| C2 content | [wt.-%] | 3.2 | 3.0 | 2.4 |
| XCS | [wt.-%] | 7.5 | 8.0 | 4.9 |
| $H_2$/C3 ratio | [mol/kmol] | 17.7 | 20.1 | 13.4 |
| C2/C3 ratio | [mol/kmol] | 15.6 | 15.2 | 15.1 |
| **2 GPR** | | | | |
| $MFR_2$ | [g/10min] | 1.2 | 1.2 | 1.6 |
| C2 content | [wt.-%] | 10.0 | 10.0 | 8.9 |
| XCS | [wt.-%] | 35.6 | 37.4 | 33.9 |
| C2 of XCS | [wt.-%] | 21.5 | 22.0 | 21.0 |
| IV of XCS | [dl/g] | 2.3 | 3.0 | 1.9 |
| $H_2$/C3 ratio | [mol/kmol] | 222 | 214 | 461 |
| C2/C3 ratio | [mol/kmol] | 177 | 185 | 184 |
| **3 GPR** | | | | |
| $MFR_2$ | [g/10min] | 1.1 | 1.6 | 1.7 |
| C2 content | [wt.-%] | 9.7 | 10.2 | 10.2 |
| XCS | [wt.-%] | 36.0 | 39.0 | 40.0 |
| C2 of XCS | [wt.-%] | 21.0 | 22.0 | 21.0 |
| IV of XCS | [dl/g] | 2.3 | 3.0 | 1.9 |
| $H_2$/C3 ratio | [mol/kmol] | 223 | 222 | 425 |
| C2/C3 ratio | [mol/kmol] | 178 | 176 | 183 |

(continued)

| Split | | | | |
|---|---|---|---|---|
| Loop | [wt.-%] | 26.6 | 24.5 | 23.9 |
| 1GPR | [wt.-%] | 36.3 | 31.9 | 28.7 |
| (2GPR+3GPR) | [wt.-%] | 37.1 | 43.6 | 47.4 |
| **Visbreaking** | | | | |
| POX | [wt.-%] | - | 0.011 | 0.008 |
| $MFR_2$ | [g/10min] | 1.1 | 3.7 | 3.9 |

C2 ethylene
IV intrinsic viscosity
$H_2$/C3 ratio hydrogen / propylene ratio
C2/C3 ratio ethylene / propylene ratio
POX 2,5-dimethyl-2,5-di-(tert. butylperoxy)hexane
1/2/3 GPR 1/2/3 gas phase reactor
Loop Loop reactor

**Table 2 (a):** Properties (Comperative Examples) before vis-breaking

| | | CE1 | CE2 | CE3 |
|---|---|---|---|---|
| $MFR_2$ | [g/10min] | 1.2 | 1.4 | 1.4 |
| C2 total | [wt.-%] | 13.9 | 9.4 | 11.7 |
| XCS | [wt.-%] | 41 | 26 | 35 |
| C2 of XCS | [wt.-%] | 28.0 | 29.0 | 29.0 |
| IV of XCS | [dl/g] | 2.3 | 3.4 | 2.0 |
| C2 of XCI | [wt.-%] | - | 4.6 | 4.6 |
| IV of XCI | [dl/g] | - | 2.7 | 2.5 |
| Flexural modulus | [MPa] | 439 | 740 | 567 |
| Impact strength (23 °C) | [kJ/m$^2$] | | 79 | 82 |
| Impact strength (-20 °C) | [kJ/m$^2$] | | 7.0 | 8.3 |
| **Injection molded specimen (1mm)** | | | | |
| T (b.s) | [%] | - | - | 74 |
| H (b.s) | [%] | 87 | - | 87 |
| C (b.s) | [%] | - | - | 88 |
| T (a.s) | [%] | - | - | 70 |
| H (a.s) | [%] | - | - | 95 |
| C (a.s) | [%] | - | - | 83 |

**Table 2 (b):** Properties (Inventive Examples) before vis-breaking

| | | E1 | E2 | E3 |
|---|---|---|---|---|
| $MFR_2$ | [g/10min] | 1.1 | 1.6 | 1.7 |
| C2 total | [wt.-%] | 9.7 | 10.2 | 10.2 |
| XCS | [wt.-%] | 37 | 39 | 40 |

(continued)

| | | E1 | E2 | E3 |
|---|---|---|---|---|
| C2 of XCS | [wt.-%] | 21.0 | 22.0 | 21.0 |
| IV of XCS | [dl/g] | 2.3 | 3.0 | 1.9 |
| C2 of XCI | [wt.-%] | - | 3.9 | 4.5 |
| IV of XCI | [dl/g] | - | 2.5 | 2.6 |
| Flexural modulus | [MPa] | 442 | 414 | 395 |
| Impact strength (23 °C) | [kJ/m$^2$] | - | 89 | 85 |
| Impact strength (-20 °C) | [kJ/m$^2$] | - | 5.0 | 4.9 |
| **Injection molded specimen (1mm)** | | | | |
| T (b.s) | [%] | 77 | 79 | 81 |
| H (b.s) | [%] | 59 | 50 | 35 |
| C (b.s) | [%] | 95 | 96 | 95 |
| T (a.s) | [%] | - | 74 | 74 |
| H (a.s) | [%] | - | 65 | 48 |
| C (a.s) | [%] | - | 95 | 94 |

**Table 2 (c):** Properties after vis-breaking

| | | CE2 | CE3 | E2 | E3 |
|---|---|---|---|---|---|
| $MFR_2$ | [g/10min] | 3.9 | 4.0 | 3.7 | 3.9 |
| C2 total | [wt.-%] | 9.4 | 11.8 | 10.1 | 10.2 |
| XCS | [wt.-%] | 25 | 32 | 36 | 36 |
| C2 of XCS | [wt.-%] | 25 | 25 | 22 | 22 |
| IV of XCS | [dl/g] | 2.2 | 2.1 | 2.2 | 2.0 |
| C2 of XCI | [wt.-%] | 5.2 | 4.5 | 4.1 | 3.9 |
| IV of XCI | [dl/g] | 2.0 | 2.0 | 2.0 | 2.1 |
| MWD of XCI | [-] | 4.8 | 4.7 | 4.5 | 5.1 |
| Flexural modulus | [MPa] | 719 | 550 | 413 | 396 |
| Impact strength (23 °C) | [kJ/m$^2$] | 49 | 54 | 72 | 70 |
| Impact strength (-20 °C) | [kJ/m$^2$] | 5.3 | 6.7 | 6.4 | 6.9 |
| **Injection molded specimen (1mm)** | | | | | |
| T (b.s) | [%] | - | 74 | 79 | 81 |
| H (b.s) | [%] | - | 76 | 47 | 34 |
| C (b.s) | [%] | - | 89 | 97 | 94 |
| T (a.s) | [%] | - | 69 | 74 | 75 |
| H (a.s) | [%] | - | 88 | 62 | 49 |
| C (a.s) | [%] | - | 83 | 94 | 92 |
| **Film sample (50 $\mu$m)** | | | | | |
| T (b.s) | [%] | - | - | 94 | - |

(continued)

| Film sample (50 μm) | | | | | |
|---|---|---|---|---|---|
| H (b.s) | [%] | - | - | 9 | - |
| C (b.s) | [%] | - | - | 80 | - |
| T (a.s) | [%] | - | - | 92 | - |
| H (a.s) | [%] | - | - | 14 | - |
| C (a.s) | [%] | - | - | 75 | - |

C2 ethylene
XCS xylene cold soluble fraction
XCI xylene cold insoluble fraction
IV intrinsic viscosity
$H_2$/C3 ratio hydrogen / propylene ratio
C2/C3 ratio ethylene / propylene ratio
POX 2,5-dimethyl-2,5-di-(tert. butylperoxy)hexane
1/2/3 GPR 1/2/3 gas phase reactor
Loop Loop reactor
T (b.s) transparency before sterilization
T (a.s) transparency after sterilization
H (b.s) haze before sterilization
H (a.s) haze after sterilization
C (b.s) haze before sterilization
C (a.s) haze after sterilization

## Claims

**1.** Process for the preparation of a heterophasic propylene copolymer (RAHECO) comprising a random propylene copolymer (R-PP) and an elastomeric propylene copolymer (E), wherein the process is a sequential polymerization process comprising the steps of

(a) polymerizing in a first reactor (R1)
propylene and
ethylene and/or a C4 to C12 α-olefin
obtaining a first random propylene copolymer fraction (R-PP1),
(b) transferring the first random propylene copolymer fraction (R-PP1) into a second reactor (R2),
(c) polymerizing in said second reactor (R2) in the presence of the first random propylene copolymer fraction (R-PP1)
propylene and
ethylene and/or a C4 to C12 α-olefin,
obtaining a second random propylene copolymer fraction (R-PP2), the first random propylene copolymer fraction (R-PP1) and the second random propylene copolymer fraction (R-PP2) form the matrix (M) of the heterophasic propylene copolymer (RAHECO), i.e. form the random propylene copolymer (R-PP),
wherein said matrix (M), i.e. the random propylene copolymer (R-PP), has a comonomer content in the range of 1.0 to 9.0 wt.-%,
(d) transferring said the matrix (M), i.e. said random propylene copolymer (R-PP) into a third reactor (R3),
(e) polymerizing in said third reactor (R3) in the presence of said the matrix (M), i.e. of said random propylene copolymer (R-PP),
propylene and
ethylene and/or a C4 to C12 α-olefin,
obtaining a first fraction (E-1) of the elastomeric propylene copolymer (E) of the heterophasic propylene copolymer (RAHECO), said first fraction (E-1) and the matrix (M), i.e. said random propylene copolymer (R-PP), form a first intimate mixture (IM),
(f) transferring said first intimate mixture (IM) into a fourth reactor (R4),
(g) polymerizing in said fourth reactor (R4) in the presence of the first intimate mixture (IM)

propylene and
ethylene and/or a C4 to C12 α-olefin,
obtaining a second fraction (E-2) of the elastomeric propylene copolymer (E) of the heterophasic propylene copolymer (RAHECO), the second fraction (E-2) and the first intimate mixture (IM) form the heterophasic propylene copolymer (RAHECO),
(h) removing the heterophasic propylene copolymer (RAHECO) from the fourth reactor (R4),
(i) optionally visbreaking said the heterophasic propylene copolymer (RAHECO),

wherein
the heterophasic propylene copolymer (RAHECO) after step (g) and/or (i) has

(i) a xylene cold soluble content (XCS) determined according ISO 16152 (25 °C) in the range of 20 to 45 wt.-%, and
(ii) a comonomer content in the range of 7.5 to 12.0 wt.-%.
and wherein further
(iii) the xylene cold soluble (XCS) fraction of the heterophasic propylene copolymer (RAHECO) after step (g) and/or (i) has a comonomer content in the range of 16.0 to 28.0 wt.-%.

**2.** Process according to claim 1, wherein the polymerization takes place in the presence of a Ziegler-Natta catalyst and optionally in the presence of an external donor of formula (IIIa)

$$Si(OCH_3)_2R_2^5 \qquad \text{(IIIa)}$$

wherein $R^5$ represents a branched-alkyl group having 3 to 12 carbon atoms,
and wherein further

(a) the comonomer/propylene ratio [Co/C3] in the second reactor (R2), i.e. in step (c), is in the range of 5 to 60 mol/kmol,
and/or
(b) the comonomer/propylene ratio [Co/C3] in the third reactor (R3), i.e. in step (e), is in the range of 160 to 200 mol/kmol,
and/or
(c) the comonomer/propylene ratio [Co/C3] in the fourth reactor (R4), i.e. in step (g), is in the range of 160 to 200 mol/kmol.

**3.** Process according to claim 1 or 2, wherein the first random propylene copolymer fraction (R-PP1) has

(a) a comonomer content 0.5 to 5.5 wt.-%,
and/or
(b) a xylene cold soluble (XCS) fraction in the range of 3.0 to 10.0 wt.-%, and/or
(c) a melt flow rate MFR2 (230 °C) in the range of 0.3 to 3.5 g/10min.

**4.** Process according to claim 1 or 2, wherein the second random propylene copolymer fraction (R-PP2) has

(a) a comonomer content 0.5 to 20.0 wt.-%,
and/or
(b) a xylene cold soluble (XCS) fraction in the range of 2 to 35 wt.-%.

**5.** Process according to one of the preceding claims, wherein the matrix (M), i.e. the random propylene copolymer (R-PP), has

(a) a comonomer content 1.0 to 9.0 wt.-%,
and/or
(b) a xylene cold soluble (XCS) fraction in the range of 2.0 to 15.0 wt.-%, and/or
(c) a melt flow rate MFR2 (230 °C) in the range of 0.3 to 3.5 g/10min.

**6.** Process according to one of the preceding claims, wherein the first intimate mixture (IM) has

(a) a comonomer content 6.0 to 12.0 wt.-%,

and/or
(b) the first intimate mixture (IM) has a xylene cold soluble (XCS) fraction in the range of 25 to 40 wt.-%.

**7.** Process according to one of the preceding claims, wherein the xylene cold soluble (XCS) fraction of the first intimate mixture (IM) has a comonomer content 14.0 to 27.0 wt.-%.

**8.** Process according to one of the preceding claims, wherein elastomeric propylene copolymer (E) of the heterophasic propylene copolymer (RAHECO), i.e. the polymers produced in reactors (R3) and (R4) together, has/have a comonomer content in the range of 14 to 25wt.-%.

**9.** Process according to one of the preceding claims, wherein

(a) the heterophasic propylene copolymer (RAHECO) after step (g) has a melt flow rate $MFR_2$ (230 °C) in the range of 0.5 to 3.0 g/10min,
and/or
(b) the intrinsic viscosity of the xylene cold soluble (XCS) fraction of the heterophasic propylene copolymer (RAHECO) after step (g) is in the range of 1.5 to 3.7 dl/g.

**10.** Process according to one of the preceding claims, wherein the heterophasic propylene copolymer (RAHECO) after step (g) and/or (i) fulfills inequation (I)

$$\frac{Co\ (total)}{Co\ (XCS)} \leq 0.70$$

wherein

Co (total) is the comonomer content [wt.-%] of the heterophasic propylene copolymer (RAHECO) after step (g) and (i), respectively,
Co (XCS) is the comonomer content [wt.-%] of the xylene cold soluble fraction (XCS) of the heterophasic propylene copolymer (RAHECO) after step (g) and (i), respectively.

**11.** Process according to one of the preceding claims, wherein the weight ratio between

(a) the first random propylene copolymer fraction (R-PP1) (produced in step (a)) and the second random propylene copolymer fraction (R-PP2) (produced in step (c)) is 20/80 to 80/20,
and/or
(b) the matrix (M), i.e. the random propylene copolymer (R-PP), after step (c) and the elastomeric propylene copolymer (E) produced in the steps (e) to (g) is 45/55 to 80/20.

**12.** Process according to one of the preceding claims, wherein the heterophasic propylene copolymer (RAHECO) after step (g) and/or (i) has a melting temperature Tm determined by differential scanning calorimetry (DSC) in the range of 145 to 160 °C.

**13.** Process according to one of the preceding claims, wherein the heterophasic propylene copolymer (RAHECO) after step (i) has

(a) has a melt flow rate $MFR_2$ (230 °C) in the range of 2.5 to 12.0 g/10min, and/or
(b) an intrinsic viscosity (IV) of the xylene cold soluble (XCS) fraction determined according to DIN ISO 1628/1, (in Decalin at 135 °C) in the range of 1.8 to below 2.7 dl/g.

## Patentansprüche

**1.** Verfahren zur Herstellung eines heterophasischen Propylen-Copolymers (RAHECO), umfassend ein statistisches Propylen-Copolymer (R-PP) und ein elastomeres Propylen-Copolymer (E), wobei das Verfahren ein sequentielles Polymerisations-Verfahren ist, umfassend die Schritte von

(a) Polymerisieren in einem ersten Reaktor (R1) Propylen und
Ethylen und/oder ein C4 bis C12 $\alpha$-Olefin,
Gewinnen einer ersten statistischen Propylen-Copolymer-Fraktion (R-PP1),
(b) Überführen der ersten statistischen Propylen-Copolymer-Fraktion (R-PP1) in einen zweiten Reaktor (R2),
(c) Polymerisieren in dem zweiten Reaktor (R2) in Gegenwart der ersten statistischen Propylen-Copolymer-Fraktion (R-PP1)
Propylen und
Ethylen und/oder ein C4 bis C12 $\alpha$-Olefin,
Gewinnen einer zweiten statistischen Propylen-Copolymer-Fraktion (R-PP2), wobei die erste statistische Propylen-Copolymer-Fraktion (R-PP1) und die zweite statistische Propylen-Copolymer-Fraktion (R-PP2) die Matrix (M) des heterophasischen Propylen-Copolymers (RAHECO) bilden, d.h. das statistische Propylen-Copolymer (R-PP) bilden,
wobei die Matrix (M), d.h. das statistische Propylen-Copolymer (R-PP) einen Comonomer-Gehalt in dem Bereich von 1,0 bis 9,0 Gew.-% aufweist,
(d) Überführen der Matrix (M), d.h. des statistischen Propylen-Copolymers (R-PP) in einen dritten Reaktor (R3),
(e) Polymerisieren in dem dritten Reaktor (R3) in Gegenwart der Matrix (M), d.h. des statistischen Propylen-Copolymers (R-PP),
Propylen und
Ethylen und/oder ein C4 bis C12 $\alpha$-Olefin,
Gewinnen einer ersten Fraktion (E-1) des elastomeren Propylen-Copolymers (E) des heterophasischen Propylen-Copolymers (RAHECO), wobei die erste Fraktion (E-1) und die Matrix (M), d.h. das statistische Propylen-Copolymer (R-PP), ein erstes inniges Gemisch (IM) bilden,
(f) Überführen des ersten innigen Gemisches (IM) in einen vierten Reaktor (R4),
(g) Polymerisieren in dem vierten Reaktor (R4) in Gegenwart des ersten innigen Gemisches (IM) Propylen und Ethylen und/oder ein C4 bis C12 $\alpha$-Olefin Gewinnen einer zweiten Fraktion (E-2) des elastomeren Propylen-Copolymers (E) des heterophasischen Propylen-Copolymers (RAHECO), wobei die zweite Fraktion (E-2) und das erste innige Gemisch (IM) das heterophasische Propylen-Copolymer (RAHECO) bilden,
(h) Entfernen des heterophasischen Propylen-Copolymers (RAHECO) aus dem vierten Reaktor (R4),
(i) gegebenenfalls Visbreaking des heterophasischen Propylen-Copolymers (RAHECO),

wobei
das heterophasische Propylen-Copolymer (RAHECO) nach Schritt (g) und/oder (i) aufweist

(i) einen in kaltem Xylol löslichen Gehalt (XCS), bestimmt gemäß ISO 16152 (25°C), in dem Bereich von 20 bis 45 Gew.-%, und
(ii) einen Comonomer-Gehalt in dem Bereich von 7,5 bis 12,0 Gew.-%,
und wobei weiterhin
(iii) die in kaltem Xylol lösliche Fraktion (XCS) des heterophasischen Propylen-Copolymers (RAHECO) nach Schritt (g) und/oder (i) einen Comonomer-Gehalt in dem Bereich von 16,0 bis 28,0 Gew.-% aufweist.

**2.** Verfahren nach Anspruch 1, wobei die Polymerisation in Gegenwart eines Ziegler-Natta-Katalysators und gegebenenfalls in Gegenwart eines äußeren Donors der Formel (IIIa)

$$Si(OCH_3)_2R2^5 \qquad (IIIa)$$

stattfindet, wobei $R^5$ eine verzweigte Alkyl-Gruppe mit 3 bis 12 Kohlenstoff-Atomen wiedergibt und wobei weiterhin

(a) das Comonomer/Propylen-Verhältnis [Co/C3] in dem zweiten Reaktor (R2), d.h. in Schritt (c), in dem Bereich von 5 bis 60 Mol/kMol liegt,
und/oder
(b) das Comonomer/Propylen-Verhältnis [Co/C3] in dem dritten Reaktor (R3), d.h. in Schritt (e), in dem Bereich von 160 bis 200 Mol/kMol liegt,
und/oder
(c) das Comonomer/Propylen-Verhältnis [Co/C3] in dem vierten Reaktor (R4), d.h. in Schritt (g), in dem Bereich von 160 bis 200 Mol/kMol liegt.

**3.** Verfahren nach Anspruch 1 oder 2, wobei die erste statistische Propylen-Copolymer-Fraktion (R-PP1) aufweist

(a) einen Comonomer-Gehalt von 0,5 bis 5,5 Gew.-%, und/oder
(b) eine in kaltem Xylol lösliche Fraktion (XCS) in dem Bereich von 3,0 bis 10,0 Gew.-%, und/oder
(c) eine Schmelze-Fließ-Rate MFR2 (230°C) in dem Bereich von 0,3 bis 3,5 g/10 min.

**4.** Verfahren nach Anspruch 1 oder 2, wobei die zweite statistische Propylen-Copolymer-Fraktion (R-PP2) aufweist

(a) einen Comonomer-Gehalt von 0,5 bis 20,0 Gew.-%, und/oder
(b) eine in kaltem Xylol lösliche Fraktion (XCS) in dem Bereich von 2 bis 35 Gew.-%.

**5.** Verfahren nach einem der vorangehenden Ansprüche, wobei die Matrix (M), d.h. das statistische Propylen-Copolymer (R-PP), aufweist

(a) einen Comonomer-Gehalt von 1,0 bis 9,0 Gew.-%, und/oder
(b) eine in kaltem Xylol lösliche Fraktion (XCS) in dem Bereich von 2,0 bis 15,0 Gew.-%, und/oder
(c) eine Schmelze-Fließ-Rate MFR2 (230°C) in dem Bereich von 0,3 bis 3,5 g/10 min.

**6.** Verfahren nach einem der vorangehenden Ansprüche, wobei das erste innige Gemisch (IM) aufweist

(a) einen Comonomer-Gehalt von 6,0 bis 12,0 Gew.-%, und/oder
(b) das erste innige Gemisch (IM) eine in kaltem Xylol lösliche Fraktion (XCS) in dem Bereich von 25 bis 40 Gew.-% aufweist.

**7.** Verfahren nach einem der vorangehenden Ansprüche, wobei die in kaltem Xylol lösliche Fraktion (XCS) des ersten innigen Gemisches (IM) einen Comonomer-Gehalt von 14,0 bis 27,0 Gew.-% aufweist.

**8.** Verfahren nach einem der vorangehenden Ansprüche, wobei das elastomere Propylen-Copolymer (E) des heterophasischen Propylen-Copolymers (RAHECO), d.h. die Polymere, hergestellt in Reaktoren (R3) und (R4) zusammen, einen Comonomer-Gehalt in dem Bereich von 14 bis 25 Gew.-% aufweist/aufweisen.

**9.** Verfahren nach einem der vorangehenden Ansprüche, wobei

(a) das heterophasische Propylen-Copolymer (RAHECO) nach Schritt (g) eine Schmelze-Fließ-Rate MFR2 (230°C) in dem Bereich von 0,5 bis 3,0 g/10 min aufweist, und/oder
(b) die Grenz-Viskosität der in kaltem Xylol löslichen Fraktion (XCS) des heterophasischen Propylen-Copolymers (RAHECO) nach Schritt (g) in dem Bereich von 1,5 bis 3,7 dl/g liegt.

**10.** Verfahren nach einem der vorangehenden Ansprüche, wobei das heterophasische Propylen-Copolymer (RAHECO) nach Schritt (g) und/oder (i) Ungleichung (I) erfüllt
Scan
wobei

Co (gesamt) der Comonomer-Gehalt [Gew.-%] des heterophasischen Propylen-Copolymers (RAHECO) nach Schritt (g) bzw. (i) ist,
Co (XCS) der Comonomer-Gehalt [Gew.-%] der in kaltem Xylol löslichen Fraktion (XCS) des heterophasischen Propylen-Copolymers (RAHECO) nach Schritt (g) bzw. (i) ist.

**11.** Verfahren nach einem der vorangehenden Ansprüche, wobei das Gewichts-Verhältnis zwischen

(a) der ersten statistischen Propylen-Copolymer-Fraktion (R-PP1) (hergestellt in Schritt (a)) und der zweiten statistischen Propylen-Copolymer-Fraktion (R-PP2) (hergestellt in Schritt (c)) 20/80 bis 80/20 ist, und/oder
(b) die Matrix (M), d.h. das statistische Propylen-Copolymer (R-PP), nach Schritt (c) und das elastomere Propylen-Copolymer (E), hergestellt in den Schritten (e) bis (g), 45/55 bis 80/20 ist.

**12.** Verfahren nach einem der vorangehenden Ansprüche, wobei das heterophasische Propylen-Copolymer (RAHECO)

nach Schritt (g) und/oder (i) eine Schmelz-Temperatur Tm, bestimmt durch dynamische Differenz-Kalorimetrie (DSC), in dem Bereich von 145 bis 160°C aufweist.

**13.** Verfahren nach einem der vorangehenden Ansprüche, wobei das heterophasische Propylen-Copolymer (RAHECO) nach Schritt (i) aufweist

(a) eine Schmelze-Fließ-Rate MFR2 (230°C) in dem Bereich von 2,5 bis 12,0 g/10 min,
und/oder
(b) eine Grenz-Viskosität (IV) der in kaltem Xylol löslichen Fraktion (XCS), bestimmt gemäß DIN ISO 1628/1, (in Decalin bei 135°C) in dem Bereich von 1,8 bis unter 2,7 dl/g.

## Revendications

**1.** Procédé pour la préparation d'un copolymère de propylène hétérophasique (RAHECO) comprenant un copolymère de propylène statistique (R-PP) et un copolymère de propylène élastomère (E), lequel procédé est un procédé de polymérisation séquentielle comprenant les étapes de

(a) polymérisation, dans un premier réacteur (R1) de propylène et
d'éthylène et/ou d'une $\alpha$-oléfine en $C_4$ à $C_{12}$,
ce qui donne une première fraction de copolymère de propylène statistique (R-PP1),
(b) transfert de la première fraction de copolymère de propylène statistique (R-PP1) dans un deuxième réacteur (R2),
(c) polymérisation dans ledit deuxième réacteur (R2), en présence de la première fraction de copolymère de propylène statistique (R-PP1), de propylène et d'éthylène et/ou d'une $\alpha$-oléfine en $C_4$ à $C_{12}$,
ce qui donne une deuxième fraction de copolymère de propylène statistique (R-PP2), la première fraction de copolymère de propylène statistique (R-PP1) et la deuxième fraction de copolymère de propylène statistique (R-PP2) formant la matrice (M) du copolymère de propylène hétérophasique (RAHECO), c'est-à-dire formant le copolymère de propylène statistique (R-PP),
ladite matrice (M), c'est-à-dire le copolymère de propylène statistique (R-PP), présentant une teneur en comonomères située dans la plage allant de 1,0 à 9,0 % en poids,
(d) transfert de ladite matrice (M), c'est-à-dire dudit copolymère de propylène statistique (R-PP), dans un troisième réacteur (R3),
(e) polymérisation dans ledit troisième réacteur (R3), en présence de ladite matrice (M), c'est-à-dire dudit copolymère de propylène statistique (R-PP),
de propylène et
d'éthylène et/ou d'une $\alpha$-oléfine en $C_4$ à $C_{12}$,
ce qui donne une première fraction (E-1) du copolymère de propylène élastomère (E) du copolymère de propylène hétérophasique (RAHECO), ladite première fraction (E-1) et la matrice (M), c'est-à-dire ledit copolymère de propylène statistique (R-PP), formant un premier mélange intime (IM),
(f) transfert dudit premier mélange intime (IM) dans un quatrième réacteur (R4),
(g) polymérisation dans ledit quatrième réacteur (R4), en présence du premier mélange intime (IM), de propylène et d'éthylène et/ou d'une $\alpha$-oléfine en $C_4$ à $C_{12}$,
ce qui donne une deuxième fraction (E-2) du copolymère de propylène élastomère (E) du copolymère de propylène hétérophasique (RAHECO), la deuxième fraction (E-2) et le premier mélange intime (IM) formant le copolymère de propylène hétérophasique (RAHECO),
(h) retrait du copolymère de propylène hétérophasique (RAHECO) hors du quatrième réacteur (R4),
(i) éventuellement viscoréduction dudit copolymère de propylène hétérophasique (RAHECO),

dans lequel
le copolymère de propylène hétérophasique (RAHECO), après les étapes (g) et/ou (i), présente

(i) une teneur en composés solubles dans le xylène froid (XCS), déterminée conformément à la norme ISO 16152 (25°C), située dans la plage allant de 20 à 45 % en poids, et
(ii) une teneur en comonomères située dans la plage allant de 7,5 à 12,0 % en poids,
et dans lequel en outre
(iii) la fraction soluble dans le xylène froid (XCS) du copolymère de propylène hétérophasique (RAHECO) après les étapes (g) et/ou (i) présente une teneur en comonomères située dans la plage allant de 16,0 à 28,0 % en poids.

2. Procédé selon la revendication 1, dans lequel la polymérisation se déroule en présence d'un catalyseur de Ziegler-Natta et éventuellement en présence d'un donneur externe de formule (IIIa)

$$Si\,(OCH_3)_2R_2^5 \qquad (IIIa)$$

dans laquelle $R^5$ représente un groupe alkyle ramifié possédant 3 à 12 atomes de carbone,
et dans lequel en outre

(a) le rapport comonomères/propylène [Co/C3] dans le deuxième réacteur (R2), c'est-à-dire dans l'étape (c), est situé dans la plage allant de 5 à 60 mol/kmol,
et/ou
(b) le rapport comonomères/propylène [Co/C3] dans le troisième réacteur (R3), c'est-à-dire dans l'étape (e), est situé dans la plage allant de 160 à 200 mol/kmol,
et/ou
(c) le rapport comonomères/propylène [Co/C3] dans le quatrième réacteur (R4), c'est-à-dire dans l'étape (g), est situé dans la plage allant de 160 à 200 mol/kmol.

3. Procédé selon la revendication 1 ou 2, dans lequel la première fraction de copolymère de propylène statistique (R-PP1) présente

(a) une teneur en comonomères de 0,5 à 5,5 % en poids, et/ou
(b) une fraction soluble dans le xylène froid (XCS) située dans la plage allant de 3,0 à 10,0 % en poids, et/ou
(c) un indice de fluage MFR2 (230°C) situé dans la plage allant de 0,3 à 3,5 g/10 min.

4. Procédé selon la revendication 1 ou 2, dans lequel la deuxième fraction de copolymère de propylène statistique (R-PP2) présente

(a) une teneur en comonomères de 0,5 à 20,0 % en poids, et/ou
(b) une fraction soluble dans le xylène froid (XCS) située dans la plage allant de 2 à 35 % en poids.

5. Procédé selon l'une des revendications précédentes, dans lequel la matrice (M), c'est-à-dire le copolymère de propylène statistique (R-PP), présente

(a) une teneur en comonomères de 1,0 à 9,0 % en poids, et/ou
(b) une fraction soluble dans le xylène froid (XCS) située dans la plage allant de 2,0 à 15,0 % en poids, et/ou
(c) un indice de fluage MFR2 (230°C) situé dans la plage allant de 0,3 à 3,5 g/10 min.

6. Procédé selon l'une des revendications précédentes, dans lequel

(a) le premier mélange intime (IM) présente une teneur en comonomères de 6,0 à 12,0 % en poids,
et/ou
(b) le premier mélange intime (IM) présente une fraction soluble dans le xylène froid (XCS) située dans la plage allant de 25 à 40 % en poids.

7. Procédé selon l'une des revendications précédentes, dans lequel la fraction soluble dans le xylène froid (XCS) du premier mélange intime (IM) présente une teneur en comonomères de 14,0 à 27,0 % en poids.

8. Procédé selon l'une des revendications précédentes, dans lequel le copolymère de propylène élastomère (E) du copolymère de propylène hétérophasique (RAHECO), c'est-à-dire les polymères produits dans les réacteurs (R3) et (R4) ensemble, présente(nt) une teneur en comonomères située dans la plage allant de 14 à 25 % en poids.

9. Procédé selon l'une des revendications précédentes, dans lequel

(a) le copolymère de propylène hétérophasique (RAHECO) après l'étape (g) présente un indice de fluage $MFR_2$ (230°C) situé dans la plage allant de 0,5 à 3,0 g/10 min, et/ou
(b) la viscosité intrinsèque de la fraction soluble dans le xylène froid (XCS) du copolymère de propylène hétérophasique (RAHECO) après l'étape (g) est située dans la plage allant de 1,5 à 3,7 dl/g.

**10.** Procédé selon l'une des revendications précédentes, dans lequel le copolymère de propylène hétérophasique (RAHECO) après les étapes (g) et/ou (i) satisfait à l'inégalité (I)

$$\frac{Co\ (total)}{Co\ (XCS)} \leq 0{,}70$$

où
Co (total) est la teneur en comonomères [% en poids] du copolymère de propylène hétérophasique (RAHECO) après les étapes (g) et (i), respectivement,
Co (XCS) est la teneur en comonomères [% en poids] de la fraction soluble dans le xylène froid (XCS) du copolymère de propylène hétérophasique (RAHECO) après les étapes (g) et (i), respectivement.

**11.** Procédé selon l'une des revendications précédentes, dans lequel le rapport en poids entre

(a) la première fraction de copolymère de propylène statistique (R-PP1) (produite dans l'étape (a)) et la deuxième fraction de copolymère de propylène statistique (R-PP2) (produite dans l'étape (c)) est de 20/80 à 80/20 et/ou
(b) la matrice (M), c'est-à-dire le copolymère de propylène statistique (R-PP), après l'étape (c) et le copolymère de propylène élastomère (E) produit dans les étapes (e) à (g) est de 45/55 à 80/20.

**12.** Procédé selon l'une des revendications précédentes, dans lequel le copolymère de propylène hétérophasique (RAHECO) après les étapes (g) et/ou (i) présente un point de fusion Tm, déterminé par calorimétrie à balayage différentiel (DSC), situé dans la plage allant de 145 à 160°C.

**13.** Procédé selon l'une des revendications précédentes, dans lequel le copolymère de propylène hétérophasique (RAHECO) après l'étape (i) présente

(a) un indice de fluage $MFR_2$ (230°C) situé dans la plage allant de 2,5 à 12,0 g/10 min,
et/ou
(b) une viscosité intrinsèque (IV) de la fraction soluble dans le xylène froid (XCS), déterminée conformément à la norme DIN ISO 1628/1 (dans la décaline à 135°C), située dans la plage allant de 1,8 à moins de 2,7 dl/g.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008141934 A1
- EP 0887379 A
- WO 9212182 A
- WO 2004000899 A
- WO 2004111095 A
- WO 9924478 A
- WO 9924479 A
- WO 0068315 A
- WO 8707620 A
- WO 9219653 A
- WO 9219658 A
- EP 0491566 A
- EP 491566 A
- EP 591224 A
- EP 586390 A


### Non-patent literature cited in the description


- Glossary of basic terms in polymer science. *IUPAC recommendations,* 1996
- IR-Spektroskopie für Anwender. WILEY-VCH, 1997
- Validierung in der Analytik. WILEY-VCH, 1997